# FASCICULE DE BREVET EUROPEEN

(11) **EP 3 259 462 B1**
(45) Date de publication et mention de la délivrance du brevet: **06.11.2019**
(21) Numéro de dépôt: 16713955.9
(22) Date de dépôt: 15.02.2016
(51) Int. Cl.: F02C 6/00, F02C 7/141, F02C 7/18

(54) **SYSTÈME DE RÉCUPÉRATION D'ÉNERGIE DE GAZ D'ÉCHAPPEMENT**
SYSTEM ZUR RÜCKGEWINNUNG DER ENERGIE AUS EINEM ABGAS
SYSTEM FOR RECOVERING EXHAUST GAS ENERGY

(30) Priorité: 17.02.2015 FR 1551319
(43) Date de publication de la demande: 27.12.2017
(73) Titulaire: Safran Helicopter Engines, 64510 Bordes (FR)
(72) Inventeur: DESCUBES, Olivier, Pierre, 77550 Moissy-cramayel (FR); BEDRINE, Olivier, 77550 Moissy-cramayel (FR)
(74) Mandataire: Gevers & Orès
(86) Numéro de dépôt international: PCT/FR2016/050341
(87) Numéro de publication internationale: WO 2016/132057

(56) Documents cités:
- FR-A- 1 166 419
- FR-A1- 2 357 734
- US-A- 2 623 357
- Dept. of Thermo and Fluid Dynamics, Chalmers: "MTF 171 - Gas turbine technology Exam -2005-03-12", , 12 mars 2005 (2005-03-12), XP055236966, Extrait de l'Internet: URL:http://www.tfd.chalmers.se/~thgr/gastu rbiner/Exam/Exam_2005.doc [extrait le 2015-12-16]

## Description

### 1. Domaine technique de l'invention

L'invention concerne un turbomoteur comprenant un système de récupération d'énergie de gaz d'échappement. En particulier, l'invention concerne un turbomoteur comprenant un système de récupération d'énergie de gaz d'échappement équipant un aéronef, par exemple un hélicoptère.

### 2. Arrière-plan technologique

L'état de la technique comprend notamment le document FR-A-1 166 419 qui décrit un système permettant de tirer de l'énergie mécanique de la chaleur sensible d'une masse gazeuse chaude se trouvant sensiblement à la pression atmosphérique.

Les aéronefs, notamment les hélicoptères, sont généralement équipés d'un ou plusieurs turbomoteurs, dont le principe est d'entraîner en rotation une turbine par combustion d'un gaz dans lequel est injecté du carburant.

En sortie de turbine, le gaz brulé ayant entrainé la rotation de la turbine, dit gaz d'échappement, est évacué vers l'extérieur grâce à une tuyère d'échappement. Les cycles du turbomoteur entrainent des températures de sortie des gaz d'échappement de l'ordre de 600°C. L'énergie thermique théorique contenue dans ce débit de gaz d'échappement est estimé à 60% de l'énergie potentielle contenue dans le carburant injecté à l'entrée de la turbine.

Il est alors utile de tenter de récupérer une partie de cette énergie thermique afin d'augmenter le rendement du turbomoteur. Pour ce faire, des solutions ont été proposées, notamment l'utilisation d'échangeurs thermiques situés dans la tuyère d'échappement du turbomoteur, permettant la récupération d'une partie de l'énergie thermique. Cette énergie thermique récupérée est par exemple utilisée pour préchauffer le gaz alimentant le turbomoteur avant sa combustion, ou bien pour réchauffer un gaz d'une machine secondaire présente dans l'aéronef, de type turbomachine ou machine à piston.

Néanmoins, ces solutions entrainent une multitude d'inconvénients. En effet, la présence d'un échangeur thermique dans la tuyère d'échappement induit des pertes de charges affectant le fonctionnement de la turbine. Cet échangeur thermique peut induire de l'encrassement qui affecte les performances du turbomoteur, et nécessite des procédures de lavage adaptées, ainsi que des dégradations en cas de perte de pale et de blade-shedding (en français pales fusibles). Le blade-shedding est une protection mécanique contre la survitesse de la turbine libre du turbomoteur.

En outre, l'utilisation d'un tel échangeur thermique nécessite que le turbomoteur soit calibré pour un fonctionnement avec cet échangeur thermique. Dans le cadre de l'utilisation de l'échangeur thermique pour préchauffer le gaz alimentant la turbine à gaz, la présence de l'échangeur thermique impose un point de fonctionnement du moteur différent du fonctionnement sans échangeur thermique, ce qui implique que les performances moteur sont fortement affectées en cas de non-utilisation de l'échangeur thermique. Cette non-utilisation de l'échangeur thermique, si elle est accidentelle (due à une panne de l'échangeur thermique), peut par ailleurs provoquer une dégradation de l'échangeur thermique et un non-fonctionnement du moteur.

Enfin, les contraintes de fonctionnement de l'échangeur thermique dans une tuyère d'échappement (températures élevées supérieures ou égales à 600°C, pression entre 4 et 8 bars, etc.), imposent un dimensionnement adapté de l'échangeur thermique entrainant notamment une augmentation de sa taille et de sa masse, ainsi que l'utilisation de matériaux résistants à ces contraintes. Or, ces matériaux adaptés aux contraintes ont généralement des performances de conduction thermique faibles, ce qui réduit l'efficacité et l'utilité de l'échangeur thermique.

### 3. Objectifs de l'invention

L'invention vise à pallier au moins certains des inconvénients des systèmes de récupération d'énergie de gaz d'échappement connus.

En particulier, l'invention vise aussi à fournir, dans au moins un mode de réalisation de l'invention, un système de récupération d'énergie qui permet de ne pas induire de pertes de charge affectant le fonctionnement d'un turbomoteur.

L'invention vise aussi à fournir, dans au moins un mode de réalisation, un système de récupération d'énergie dont une panne n'affecte pas le fonctionnement du turbomoteur.

L'invention vise aussi à fournir, dans au moins un mode de réalisation de l'invention, un système de récupération d'énergie pouvant être mis en place sur les turbomoteurs existants.

L'invention vise aussi à fournir, dans au moins un mode de réalisation, un système de récupération d'énergie permettant l'utilisation d'échangeurs thermiques fabriqués dans des matériaux ayant un meilleur rendement pour l'échange thermique.

### 4. Exposé de l'invention

Pour ce faire, l'invention concerne un turbomoteur selon la revendication 1 comprenant un système de récupération d'énergie de gaz d'échappement d'au moins un turbomoteur, comprenant :
- une turbine montée en rotation autour d'un arbre de récupération, adaptée pour prélever au moins une partie des gaz d'échappement, dits gaz prélevés, et pour détendre lesdits gaz prélevés en des gaz détendus à une pression inférieure à la pression atmosphérique,
- un premier échangeur thermique, adapté pour refroidir à l'aide d'une source froide lesdits gaz détendus en des gaz refroidis,
- un compresseur monté en rotation autour dudit arbre de récupération, adapté pour compresser à la pression atmosphérique lesdits gaz refroidis,
- un ventilateur configuré pour apporter la source froide au premier échangeur thermique, le ventilateur étant entrainé en rotation par l'arbre de récupération.

Un système selon l'invention permet donc la récupération d'au moins une partie de l'énergie de gaz d'échappement d'au moins un turbomoteur, et ce de façon déportée, contrairement à l'état de la technique. En effet, une partie du gaz d'échappement est ici prélevée afin d'effectuer l'échange thermique via l'échangeur thermique dans des conditions plus favorables que dans l'art antérieur où l'échangeur thermique se situait dans une tuyère d'échappement du turbomoteur. La turbine, permettant de prélever les gaz d'échappement, permet en outre la réduction de la pression des gaz d'échappement, et donc une baisse de la température des gaz d'échappement. L'échangeur thermique est donc soumis à une pression et une température plus faibles, permettant d'utiliser des matériaux ayant un meilleur rendement pour l'échange thermique. De même, le fait que la pression des gaz circulants entre la turbine et le compresseur soit une pression faible, inférieure à la pression atmosphérique, permet généralement de limiter les sollicitations internes de ces gaz sur les composants du système de récupération d'énergie.

De préférence, le système de récupération d'énergie ne prélève pas la totalité des gaz d'échappement, pour conserver une bonne efficacité en prélevant principalement les gaz à haute température, la part des gaz d'échappement prélevé dépendant de l'aérodynamique d'une tuyère d'échappement du turbomoteur permettant l'évacuation des gaz d'échappement. Le prélèvement pourra avantageusement être effectué dans une partie coudée de la tuyère d'échappement. Une telle partie coudée est par exemple généralement présente dans les tuyères d'échappement des turbomoteurs équipant les hélicoptères.

L'énergie récupérée du gaz d'échappement provient de la différence entre l'énergie mécanique produite lors de la traversée de la turbine par les gaz d'échappement et transmise à l'arbre de récupération, et l'énergie consommée par l'arbre de récupération pour entrainer en rotation le compresseur afin de compresser les gaz d'échappement refroidis par le premier échangeur thermique. A cette énergie récupérée peut le cas échéant être soustraite l'éventuelle énergie nécessaire à l'apport de la source froide jusqu'à l'échangeur. L'énergie récupérée est donc utilisable sous la forme d'énergie mécanique transmise par l'arbre de récupération. L'arbre de récupération est ensuite par exemple connecté à d'autres arbres, par le biais d'une boite relais, pour fournir à ces autres arbres de l'énergie mécanique supplémentaire. Les arbres pouvant utiliser l'énergie récupérée au niveau de l'arbre de récupération sont par exemple un arbre de la turbine libre du turbomoteur, un arbre du générateur de gaz du turbomoteur, un arbre de la boite de transmission principale d'un hélicoptère, un arbre arrière connecté au rotor de queue d'un hélicoptère, etc. Cette énergie récupérée au niveau de l'arbre de récupération est sous forme d'énergie mécanique, mais peut être ensuite convertie sous une autre forme (électrique, pneumatique, etc.).

Le prélèvement d'une partie des gaz d'échappement permet en outre de ne pas induire de pertes de charge au turbomoteur. Contrairement à l'art antérieur où l'échangeur était situé dans la tuyère d'échappement du turbomoteur, le prélèvement des gaz d'échappement par la turbine permet de ne pas perturber le fonctionnement normal du turbomoteur et donc de limiter les pertes de charge. De plus, une éventuelle panne du système de récupération d'énergie n'affectera pas le fonctionnement du turbomoteur, dont l'intégralité des gaz d'échappement sera rejetée grâce à la tuyère d'échappement. En outre, le système de récupération d'énergie est ainsi adaptable à des turbomoteurs déjà existants, et ne nécessite pas de changement du point de fonctionnement du turbomoteur sur lequel il est installé et n'affecte donc pas ses performances.

Avantageusement, un système selon l'invention comprend un deuxième échangeur thermique, adapté pour effectuer un refroidissement préalable des gaz détendus, avant le passage dans le premier échangeur thermique.

Selon cet aspect de l'invention, le deuxième échangeur permet de réduire la température des gaz d'échappement avant leur passage dans le premier échangeur thermique, afin de permettre une baisse supplémentaire des contraintes de températures du premier échangeur thermique, pouvant ainsi être conçu de façon à permettre une haute performance d'échange thermique via des matériaux plus performants et un dimensionnement réduit. Avantageusement et selon l'invention, le matériau utilisé par le premier échangeur est l'aluminium, permettant un bon compromis entre bonnes performances d'échange thermique (conductivité thermique de l'ordre de 150 W/m/°C) pour un poids réduit (masse volumique de l'ordre de 2700kg/m³).

Avantageusement, un système selon l'invention comprend une entrée d'air extérieure, adaptée pour effectuer un refroidissement préalable des gaz détendus, avant le passage dans le premier échangeur thermique.

Selon cet aspect de l'invention, l'entrée d'air permet de mélanger les gaz détendus avec de l'air provenant de l'extérieur pour abaisser sa température. L'injection d'air extérieur par l'entrée d'air est facilitée par le fait que les gaz détendus sont à une pression inférieure à la pression atmosphérique de l'air extérieur. Les gaz ainsi refroidis sont transmis au premier échangeur. L'entrée d'air peut remplacer ou compléter le deuxième échangeur décrit précédemment.

Avantageusement, un système selon l'invention comprend une pluralité de conduites reliant la turbine à une pluralité de tuyères d'échappement pour prélever des gaz d'échappement provenant d'une pluralité de turbomoteurs.

Selon cet aspect de l'invention, un seul système de récupération d'énergie permet de récupérer une partie de l'énergie des gaz d'échappement provenant d'une pluralité de turbomoteurs.

L'invention concerne également un turbomoteur, équipé d'un système de récupération d'énergie selon l'invention.

Un turbomoteur selon l'invention permet un meilleur rendement global de fonctionnement par la récupération d'une partie de l'énergie potentielle sous forme de chaleur contenue dans les gaz d'échappement, par le système de récupération d'énergie.

Alternativement, un turbomoteur comprend en outre un générateur de gaz entrainé en rotation par un arbre de générateur de gaz, et l'arbre de récupération est relié à l'arbre de générateur de gaz.

Selon cet aspect qui n'est pas couvert par les revendications, l'énergie mécanique récupérée par le système de récupération d'énergie est utilisée au niveau de l'arbre de générateur de gaz, augmentant ainsi les performances du turbomoteur. En cas de panne du système de récupération d'énergie, le générateur de gaz peut fonctionner normalement, avec comme seule conséquence une réduction des performances du turbomoteur.

Le turbomoteur selon l'invention comprend en outre une turbine libre entrainant en rotation un arbre de turbine libre, et l'arbre de récupération est relié à l'arbre de turbine libre.

Selon cet aspect de l'invention, l'énergie mécanique récupérée par le système de récupération d'énergie est utilisée au niveau de l'arbre de turbine libre, destiné par exemple à entrainer la rotation d'une hélice, augmentant ainsi les performances du turbomoteur. En cas de panne du système de récupération d'énergie, le générateur de gaz peut fonctionner normalement, avec comme seule conséquence une réduction des performances du turbomoteur.

L'invention concerne également un hélicoptère comprenant un turbomoteur selon l'invention.

Avantageusement et selon l'invention, l'hélicoptère comprenant en outre un rotor de queue entrainé par un arbre arrière, l'arbre de récupération est relié audit arbre arrière.

L'invention concerne également un procédé de récupération d'énergie de gaz d'échappement de turbomoteur, mais qui n'est pas couvert par les revendications, comprenant :
- une étape de prélèvement d'au moins une partie du gaz d'échappement,
- une étape de détente du gaz d'échappement prélevé à l'étape de prélèvement,
- une étape de refroidissement du gaz d'échappement détendu à l'étape de détente,
- une étape de compression du gaz d'échappement refroidi à l'étape de refroidissement.

Avantageusement, le procédé de récupération d'énergie selon l'invention est mis en œuvre par le système de récupération d'énergie selon l'invention.

Avantageusement, le système de récupération d'énergie selon l'invention met en œuvre le procédé de récupération d'énergie selon l'invention.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique un turbomoteur équipé d'un système de récupération d'énergie selon un mode de réalisation de l'invention,
- la figure 2 est une vue schématique d'un système de récupération d'énergie selon un premier mode de réalisation de l'invention,
- la figure 3 est une vue schématique d'un système de récupération d'énergie selon un deuxième mode de réalisation de l'invention,
- la figure 4 est une représentation schématique d'un procédé de récupération d'énergie selon un mode de réalisation de l'invention,
- la figure 5 est une vue schématique d'un hélicoptère comprenant un turbomoteur selon un mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

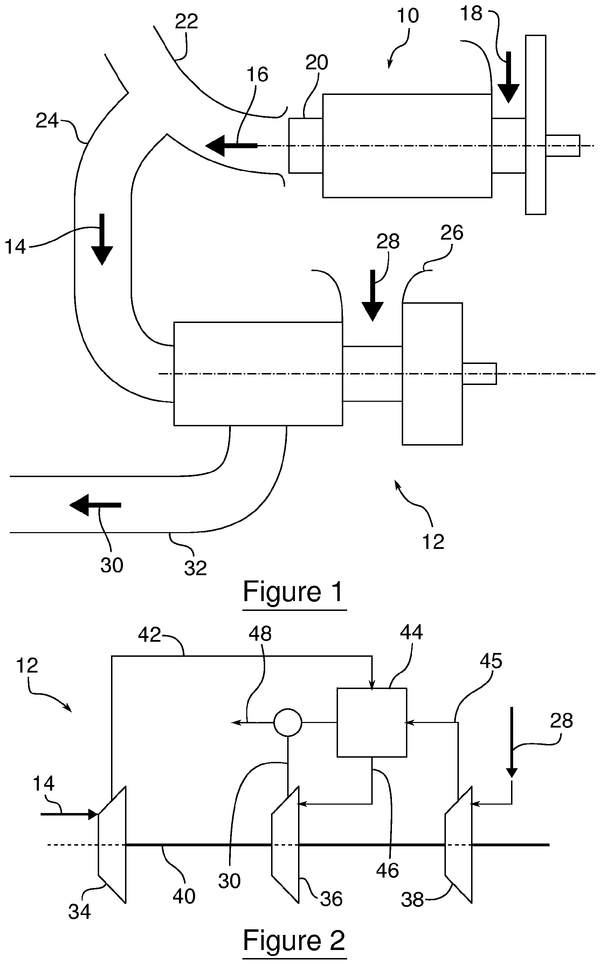

La figure 1 représente schématiquement un turbomoteur 10 équipé d'un système 12 de récupération d'énergie selon un mode de réalisation de l'invention.

Le système 12 de récupération d'énergie est adapté pour récupérer au moins une partie 14 des gaz d'échappement du turbomoteur 10 afin de récupérer une partie de l'énergie thermique provenant des gaz 16 d'échappement. Ces gaz 16 d'échappement sont formés de gaz 18 entrant dans le turbomoteur 10 via une conduite d'entrée, puis mélangés avec du carburant et brulés dans le turbomoteur 10 afin d'entraîner la rotation d'une turbine 20 libre en sortie du turbomoteur 10. La majorité de l'énergie cinétique des gaz brulés est récupérée par la mise en rotation de la turbine 20 libre, l'énergie cinétique résiduelle permettant l'évacuation des gaz 16 d'échappement en sortie de cette turbine 20 libre. Les gaz 16 d'échappement sont évacués via une tuyère 22 d'échappement, permettant, dans le cadre de l'utilisation du turbomoteur 10 dans un aéronef, l'évacuation des gaz 16 d'échappement à l'air libre, en dehors de l'aéronef.

Le système 12 de récupération d'énergie permet le prélèvement d'une partie de ces gaz d'échappement, représentée par la flèche 14, par exemple par le biais d'une conduite 24 de prélèvement reliée à la tuyère 22 d'échappement du turbomoteur 10. Le prélèvement de la partie 14 des gaz d'échappement s'effectue grâce à une turbine permettant la détente des gaz d'échappement prélevés, permettant une aspiration de la partie 14 des gaz d'échappement dans la tuyère d'échappement via la conduite 24 de prélèvement. Selon un autre mode de réalisation de l'invention, le système 12 de récupération d'énergie comprend une pluralité de conduites de prélèvement reliées à une pluralité de tuyères d'échappement, afin de prélever une partie des gaz d'échappement provenant d'une pluralité de turbomoteurs.

Le système 12 de récupération d'énergie comprend aussi une conduite 26 d'admission d'air 28 extérieur, permettant le refroidissement du gaz prélevé par la turbine au moyen d'un échangeur thermique présent dans le système 12 de récupération d'énergie. Une fois l'énergie de la partie 14 des gaz d'échappement récupérée, les gaz 30 de sortie sont évacués par une conduite 32 d'évacuation. Cette conduite 32 d'évacuation peut aussi servir pour l'évacuation de l'air 28 extérieur après son passage dans l'échangeur thermique.

La figure 2 représente schématiquement le système 12 de récupération d'énergie selon un premier mode de réalisation. Dans ce premier mode de réalisation, la turbine 34, un compresseur 36 et un ventilateur 38 sont reliés à un arbre 40 de récupération. La turbine 34 prélève une partie 14 des gaz d'échappement de la tuyère 10 d'échappement, et permet la détente de ces gaz d'échappement et donc une baisse de leur température, formant ainsi des gaz détendus, représentés par la flèche 42. La pression des gaz 42 détendus résultant de la détente par la turbine 34 est inférieure à la pression atmosphérique. Les gaz 42 détendus passent par un premier échangeur 44 thermique pour permettre leur refroidissement, formant ainsi des gaz refroidis, représentés par la flèche 46. Le refroidissement des gaz 42 détendus est effectué au niveau du premier échangeur 44 thermique grâce à une source 45 froide, apportée ici jusqu'au premier échangeur 44 thermique par le ventilateur 38 entrainé en rotation par l'arbre 40 de récupération et permettant l'apport d'air 28 extérieur.

Les gaz 46 refroidis par le premier échangeur 44 thermique sont transmis au compresseur 36, relié à l'arbre 40 de récupération. Le compresseur compresse les gaz 46 refroidis pour obtenir des gaz à une pression sensiblement égale à la pression atmosphérique, dits gaz 30 de sortie qui sont par exemple évacués par une conduite 32 d'évacuation comme représentée précédemment en référence avec la figure 1. La conduite d'évacuation permet aussi l'évacuation de la source 45 froide après son passage dans le premier échangeur 44 thermique. L'évacuation de la source 45 froide et des gaz 30 de sortie est représentée par la flèche 48.

L'énergie récupérée par le système 12 de récupération d'énergie est utilisable sous la forme d'énergie mécanique transmise par l'arbre 40 de récupération. Cette énergie mécanique récupérée provient de la différence entre l'énergie mécanique apportée à l'arbre 40 de récupération par la rotation de la turbine 34 du fait de la traversée de la partie 14 des gaz d'échappement, et l'énergie mécanique provenant de l'arbre 40 de récupération et consommée par le compresseur 36 pour compresser les gaz 46 refroidis à une pression sensiblement égale à la pression atmosphérique. Le refroidissement des gaz détendus par le premier échangeur 44 thermique permet de réduire la température des gaz détendus et ainsi réduire l'énergie nécessaire au compresseur 36 pour compresser les gaz refroidis à la pression atmosphérique. La quantité d'énergie récupérée est donc dépendante de l'efficacité du refroidissement par le premier échangeur 44 thermique. L'énergie consommée par le ventilateur 38 est aussi à déduire de l'énergie récupérée. L'énergie récupérée au niveau de l'arbre 40 de récupération est ensuite par exemple transmissible à d'autres arbres d'un aéronef, par le biais d'une boite relais, ou convertie sous une autre forme d'énergie.

Dans certaines situations, les gaz 42 détendus ont une température qui reste élevée en sortie de la turbine et à leur passage dans le premier échangeur 44 thermique. Ainsi, le premier échangeur 44 thermique doit être dimensionné et dans un matériau compatible avec ces températures élevées même si inférieures aux températures rencontrées dans la tuyère 22 d'échappement du turbomoteur 10.

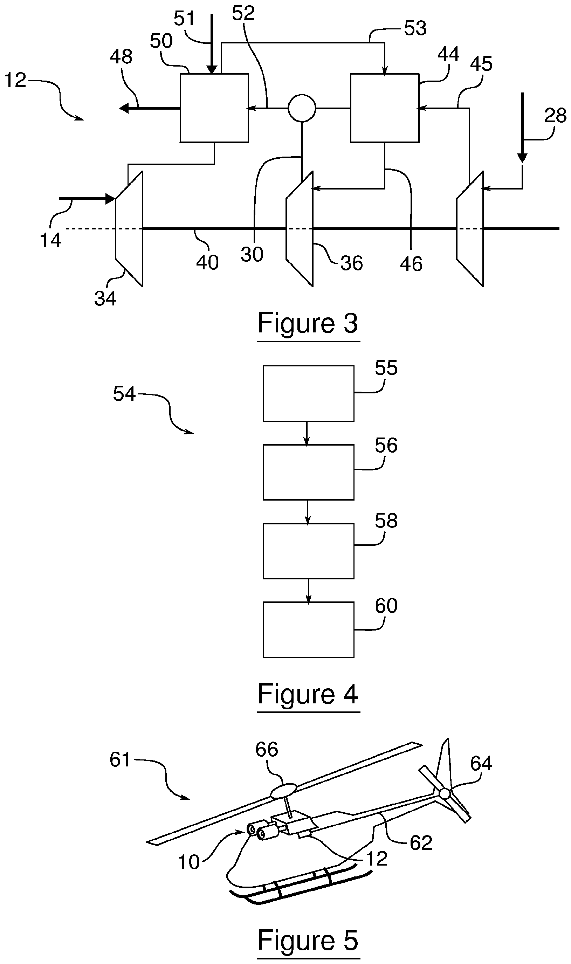

Pour permettre l'utilisation d'un premier échangeur 44 thermique plus efficace, une solution est de baisser au préalable la température des gaz 42 détendus. Pour ce faire, le système 12 de récupération d'énergie comprend un deuxième échangeur 50 thermique permettant de refroidir préalablement les gaz 42 détendus avant le passage dans ledit premier 40 échangeur thermique, comme représenté en référence avec la figure 3. Sur cette figure 3, les éléments inchangés par rapport au mode de réalisation de la figure 2 portent les mêmes références. Le refroidissement préalable dans le deuxième 50 échangeur thermique s'effectue grâce à une deuxième source 52 froide, composée par exemple des gaz 30 de sortie en sortie du compresseur et de la source 45 froide après son passage dans le premier échangeur 44 thermique. Ainsi, grâce à ce refroidissement préalable par le deuxième échangeur 50 thermique, la température des gaz 53 en entrée du premier échangeur thermique est plus faible. Le premier échangeur 44 thermique peut ainsi être réalisé dans un matériau avec des contraintes de températures d'utilisation plus adaptées et permettant un refroidissement plus efficace et/ou un dimensionnement plus faible et plus léger.

Par exemple, un matériau résistant à de hautes températures comme l'acier, a une conductivité thermique de l'ordre de 15 W/m/°C et une masse volumique de l'ordre de 7800 kg/m³. Le deuxième échangeur 50 thermique peut ainsi être par exemple fabriqué en acier. L'aluminium a une résistance aux hautes températures plus faible, mais a une conductivité thermique supérieure, de l'ordre de 150 W/m/°C et une masse volumique de l'ordre de 2700 kg/m³. Le premier échangeur 44 thermique peut ainsi être par exemple fabriqué en aluminium, permettant un refroidissement plus efficace des gaz 53 le traversant, pour un poids réduit.

D'autres types de métaux ou d'alliages de métaux peuvent être utilisés pour la fabrication du premier échangeur 44 thermique et du deuxième échangeur 50 thermique, en fonction des contraintes de températures, de dimensionnement et de la performance souhaitée, qui peuvent varier selon les turbomoteurs dont au moins une partie des gaz d'échappement sont prélevés, et selon les modes de réalisation, à un ou deux échangeurs. De préférence, les échangeurs thermiques et/ou les matériaux utilisés dans ces échangeurs thermiques sont déjà éprouvés pour une application dans un aéronef. Par exemple, le système de récupération d'énergie peut utiliser des échangeurs thermiques du type de ceux utilisés dans des systèmes de conditionnement de l'air d'une cabine d'un avion, déjà éprouvés pour l'aéronautique.

Un refroidissement préalable avant le passage dans le premier échangeur 44 thermique est aussi effectué, dans ce mode de réalisation, grâce à une entrée 51 d'air, permettant l'injection d'air extérieur dans les gaz à destination du premier échangeur 44 thermique. Le mélange des gaz avec l'air extérieur permet ainsi une baisse de la température. L'injection d'air extérieur est en outre facilitée du fait que les gaz présent dans le système 12 de récupération d'énergie sont à une pression inférieure à la pression atmosphérique.

Selon les modes de réalisations, le système 12 de récupération d'énergie peut comprendre seulement le premier échangeur 44 thermique, ou le premier 44 échangeur thermique accompagné du deuxième échangeur 50 thermique, ou accompagné de l'entrée 51 d'air, ou bien accompagné d'une combinaison du deuxième échangeur 50 thermique et de l'entrée 51 d'air.

La figure 4 représente schématiquement un procédé 54 de récupération d'énergie selon un mode de réalisation de l'invention. Le procédé 54 de récupération d'énergie comprend une étape 55 de prélèvement d'au moins une partie des gaz d'échappement, dits gaz prélevés, provenant d'un turbomoteur, tel que décrit en référence avec la figure 1. Les gaz prélevés sont ensuite détendus dans une étape 56 de détente des gaz prélevés, par exemple par la turbine 34 dans le système 12 de récupération d'énergie tel que décrit précédemment. Cette étape 56 de détente permet la formation de gaz détendus qui, du fait de la baisse de la pression, ont une température plus basse que les gaz prélevés. Les gaz détendus sont ensuite refroidis lors d'une étape 58 de refroidissement, pour former des gaz refroidis. Ces gaz refroidis sont ensuite compressés lors d'une étape 60 de compression.

Le procédé 54 de récupération d'énergie ainsi mis en œuvre suit un cycle thermodynamique de type cycle de Brayton inversé à dépression. L'énergie mécanique récupérée par ce cycle provient de l'énergie thermique comprise dans les gaz d'échappement prélevés.

La figure 5 représente schématiquement un hélicoptère 61 comprenant un turbomoteur 10 selon un mode de réalisation de l'invention. Le turbomoteur est équipé d'un système 12 de récupération d'énergie selon un mode de réalisation de l'invention. Dans ce mode de réalisation, le système 12 de réalisation d'énergie est relié à un arbre 62 arrière de l'hélicoptère 61. Cet arbre 62 arrière permet la mise en rotation d'un rotor 64 de queue de l'hélicoptère 61, permettant la stabilisation de celui-ci, notamment par compensation du couple exercé par le rotor 66 principal entrainé par le turbomoteur 10 via une boite de transmission principale. L'énergie mécanique récupérée par le système 12 de récupération d'énergie est ainsi transmise par l'arbre 40 de récupération à l'arbre 62 arrière de l'hélicoptère 61.

Le démarrage du système 12 de récupération d'énergie nécessite la mise en rotation préalable de l'arbre 40 de récupération relié à la turbine 34 et au compresseur 36 par apport d'une énergie extérieure, par exemple par l'arbre 62 arrière d'un hélicoptère. Le système 12 de récupération d'énergie est donc récepteur d'énergie pendant le démarrage. Une fois le point de fonctionnement atteint, le système 12 de récupération d'énergie atteint un équilibre dans lequel il devient moteur grâce au prélèvement d'au moins une partie des gaz d'échappement permettant la récupération d'énergie mécanique.

L'invention ne se limite pas aux seuls modes de réalisation décrits. En particulier, la source froide utilisée au niveau du ou des échangeurs peut être sous différentes formes, par exemple une arrivée d'air par ventilateur électrique ou par une trompe, etc. De plus, la réutilisation de l'énergie mécanique générée par le système peut être effectué sous une forme différente, par exemple par au niveau de la boite de transmission principale (BTP) de l'hélicoptère, ou par transformation en énergie pneumatique, électrique, etc. En outre, le système de récupération d'énergie peut comprendre plus de deux échangeurs.

## Revendications

1. Turbomoteur (10) comprenant un système de récupération d'énergie de gaz (16) d'échappement dudit turbomoteur (10), comprenant :
- une turbine (34) montée en rotation autour d'un arbre (40) de récupération, adaptée pour prélever au moins une partie (14) des gaz d'échappement, dits gaz prélevés, et pour détendre lesdits gaz prélevés en des gaz (42) détendus à une pression inférieure à la pression atmosphérique,
- un premier échangeur (44) thermique, adapté pour refroidir à l'aide d'une source (45) froide lesdits gaz (42) détendus en des gaz (46) refroidis,
- un compresseur (36) monté en rotation autour dudit arbre (40) de récupération, adapté pour compresser à la pression atmosphérique lesdits gaz (46) refroidis,
- un ventilateur (38) configuré pour apporter la source (45) froide au premier échangeur (44) thermique, le ventilateur (38) étant entrainé en rotation par l'arbre (40) de récupération,
le turbomoteur comprenant en outre une turbine (20) libre entrainant en rotation un arbre de turbine libre, et étant **caractérisé en ce que** l'arbre (40) de récupération est relié à l'arbre de turbine libre.

2. Turbomoteur (10) selon la revendication 1, dans lequel le système de récupération d'énergie comprend un deuxième échangeur (50) thermique, adapté pour effectuer un refroidissement préalable des gaz (42) détendus, avant le passage dans le premier échangeur (44) thermique.

3. Turbomoteur (10) selon l'une des revendications 1 ou 2, dans lequel le système de récupération d'énergie comprend une entrée (51) d'air, adaptée pour effectuer un refroidissement préalable des gaz (42) détendus, avant le passage dans le premier échangeur (44) thermique.

4. Turbomoteur (10) selon l'une des revendications 1 à 3, dans lequel le système de récupération d'énergie comprend une pluralité de conduites (24) reliant la turbine (34) à une pluralité de tuyères (22) d'échappement pour prélever des gaz (16) d'échappement provenant d'une pluralité de turbomoteurs (10).

5. Hélicoptère comprenant un turbomoteur (10) selon l'une des revendications 1 à 4.

6. Hélicoptère selon la revendication 5, comprenant en outre un rotor (64) de queue entrainé par un arbre (62) arrière, **caractérisé en ce que** l'arbre (40) de récupération est relié audit arbre (62) arrière.

## Patentansprüche

1. Turbomotor (10), umfassend ein System zur Rückgewinnung von Energie aus Abgas (16) des Turbomotors (10), umfassend:
- eine Turbine (34), die drehbeweglich um eine Rückgewinnungswelle (40) befestigt ist, angepasst, um mindestens einen Teil (14) der Abgase, als entnommene Gase bezeichnet, zu entnehmen, und um die entnommenen Gase zu entspannten Gasen (42) auf einen Druck unter dem Atmosphärendruck zu entspannen,
- einen ersten Wärmetauscher (44), der angepasst ist, um die entspannten Gase (42) mithilfe einer kalten Quelle (45) zu abgekühlten Gasen (46) abzukühlen,
- einen Verdichter (36), der drehbeweglich um die Rückgewinnungswelle (40) befestigt ist, angepasst, um die abgekühlten Gase (46) auf den Atmosphärendruck zu verdichten,
- einen Lüfter (38), der konfiguriert ist, um die kalte Quelle (45) zum ersten Wärmetauscher (44) zu bringen, wobei der Lüfter (38) durch die Rückgewinnungswelle (40) in Drehbewegung versetzt wird,
wobei der Turbomotor weiter eine freie Turbine (20) umfasst, die eine freie Turbinenwelle in Drehbewegung versetzt, und **dadurch gekennzeichnet ist, dass** die Rückgewinnungswelle (40) mit der freien Turbinenwelle verbunden ist.

2. Turbomotor (10) nach Anspruch 1, wobei das System zur Rückgewinnung von Energie einen zweiten Wärmetauscher (50) umfasst, angepasst, um vor dem Durchgang in den ersten Wärmetauscher (44) eine Vorabkühlung der entspannten Gase (42) durchzuführen.

3. Turbomotor (10) nach einem der Ansprüche 1 oder 2, wobei das System zur Rückgewinnung von Energie einen Lufteingang (51) umfasst, angepasst, um vor dem Durchgang in den ersten Wärmetauscher (44) eine Vorabkühlung der entspannten Gase (42) durchzuführen.

4. Turbomotor (10) nach einem der Ansprüche 1 bis 3, wobei das System zur Rückgewinnung von Energie eine Vielzahl von Leitungen (24) umfasst, die die Turbine (34) mit einer Vielzahl von Abgasdüsen (22) verbindet, um Abgase (16), die aus einer Vielzahl von Turbomotoren (10) stammen, zu entnehmen.

5. Hubschrauber, umfassend einen Turbomotor (10) nach einem der Ansprüche 1 bis 4.

6. Hubschrauber nach Anspruch 5, weiter einen Heckrotor (64) umfassend, der durch eine hintere Welle (62) angetrieben wird, **dadurch gekennzeichnet, dass** die Rückgewinnungswelle (40) mit der hinteren Welle (62) verbunden ist.

## Claims

1. Turboshaft engine (10), fitted with a system for the recovery of energy from exhaust gases (16) from said turboshaft engine (10), comprising:
- a turbine (34) fitted rotatably around a recovery shaft (40), adapted to bleed off at least a part (14) of the exhaust gases, known as bleed gases, and to expand said bleed gases to become expanded gases (42) at a pressure below atmospheric pressure;
- a first heat exchanger (44), adapted to use a cold source (45) to cool said expanded gases (42) to become cooled gases (46);
- a compressor (36) fitted rotatably around said recovery shaft (40), adapted to compress said cooled gases (46) to atmospheric pressure;
- a fan (38) configured to bring the cold source (45) to the first heat exchanger (44), the fan (38) being driven in rotation by the recovery shaft (40);
the turboshaft engine further comprising a second turbine (20) driving in rotation a second turbine shaft, **characterised in that** the recovery shaft (40) is connected to the second turbine shaft.

2. Turboshaft engine (10) according to claim 1, wherein the system for the recovery of energy comprises a second heat exchanger (50), adapted to perform a preliminary cooling of the expanded gases (42), before they pass into the first heat exchanger (44).

3. Turboshaft engine (10 according to one of claim 1 or 2, wherein the system for the recovery of energy comprises an air intake (51), adapted to perform a preliminary cooling of the expanded gases (42), before they pass into the first heat exchanger (44).

4. Turboshaft engine according to one of claims 1 to 3, wherein the system for the recovery of energy comprises a plurality of ducts (24) connecting the turbine (34) to a plurality of exhaust pipes (22) for bleeding off exhaust gases (16) originating from a plurality of turboshaft engines (10).

5. Helicopter comprising a turboshaft engine (10) according to one of claims 1 to 4.

6. Helicopter according to claim 5, further comprising a tail rotor (64) driven by a rear shaft (62), **characterised in that** the recovery shaft (40) is connected to said rear shaft (62).
